# EUROPÄISCHE PATENTANMELDUNG

(11) **EP 3 138 941 A1**
(43) Veröffentlichungstag der Anmeldung: **08.03.2017**
(21) Anmeldenummer: 16186976.3
(22) Anmeldetag: 02.09.2016
(51) Int. Cl.: D01H 4/12

(54) **STÜTZSCHEIBE MIT BALLIGER LAUFFLÄCHE**

(30) Priorität: 02.09.2015 DE 102015114659
(71) Anmelder: MASCHINENFABRIK RIETER AG, 8406 Winterthur (CH)
(72) Erfinder: Knabel, Manfred, 85055 Ingolstadt (DE); Lauer, Matthias, 73337 Unterböhringen (DE); Eberhard, Roland, 71272 Renningen (DE)
(74) Vertreter: Bergmeier, Werner

(57) **Zusammenfassung**

Eine Stützscheibe für eine Lagerung für einen Spinnrotor (2) einer Offenend-Spinnvorrichtung weist einen Grundkörper (8) und einen auf einem Außenumfang des Grundkörpers (8) aufgebrachten Laufring (9) mit einer Lauffläche (10) auf, wobei die Lauffläche (10) eine im Axialschnitt ballig geformte Außenkontur besitzt. Die Lauffläche (10) weist wenigstens zwei Teilabschnitte (11) auf, zwischen welchen wenigstens eine rillenförmige Aussparung (12, 14, 16) ausgebildet ist. Eine Lagerung für einen Spinnrotor (2) einer Offenend-Spinnvorrichtung beinhaltet paarweise angeordnete, einen Keilspalt ausbildende Stützscheiben (3), wobei der Spinnrotor (2) mit seinem Schaft (1) in dem Keilspalt lagerbar ist und wobei zumindest eine der Stützscheiben (3) wie vorbeschrieben ausgebildet ist.

## Beschreibung

Die vorliegende Erfindung betrifft eine Stützscheibe für eine Lagerung für einen Spinnrotor einer Offenend-Spinnvorrichtung, wobei die Stützscheibe einen Grundkörper und einen auf einem Außenumfang des Grundkörpers aufgebrachten Laufring mit einer Lauffläche aufweist, wobei die Lauffläche eine im Axialschnitt ballig geformte Außenkontur besitzt. Ferner betrifft die Erfindung eine Lagerung für einen Spinnrotor einer Offenend-Spinnvorrichtung mit paarweise angeordneten, einen Keilspalt ausbildenden Stützscheiben, wobei der Spinnrotor mit seinem Schaft in dem Keilspalt lagerbar ist.

Lagerungen für einen Spinnrotor einer Offenend-Spinnvorrichtung, wobei der Schaft des Spinnrotors in von Stützscheiben gebildeten Keilspalten liegt, sind aus dem Stand der Technik wohlbekannt. Dabei sind die Stützscheiben zu beiden Seiten des Schafts jeweils mit gemeinsamen Achsen gelagert. Damit ein den Spinnrotor antreibender Tangentialriemen überdies einen auf den Schaft wirkenden Axialschub erzeugt sind die Achsen der Stützscheiben gegeneinander und gegen den Schaft geneigt. Aufgrund der geneigten Anordnung der Stützscheiben und der hohen Drehzahlen im Betrieb des Spinnrotors kommt es zu einer sehr ungleichmäßigen, punktförmigen Belastung der Laufflächen und einer entsprechend hohen Wärmebelastung. Um die daraus resultierenden Verschleißerscheinungen zu reduzieren, schlägt die DE 28 01 693 A1 Stützscheiben vor, deren Laufflächen leicht ballig geschliffen sind. Hierdurch sollen die Berührungspunkte mit dem Schaft mehr zur Mitte der Laufflächen verlagert werden, so dass die auftretenden Belastungen von dort aus gleichmäßig nach beiden Seiten verteilt werden können.

Aufgabe der vorliegenden Erfindung ist es, Stützscheiben zu schaffen, bei denen der Verschleiß des Laufbelages noch weiter reduziert ist.

Die Aufgabe wird gelöst durch eine Stützscheibe und durch eine Lagerung für einen Spinnrotor mit den Merkmalen der unabhängigen Patentansprüche.

Vorgeschlagen wird eine Stützscheibe für eine Lagerung für einen Spinnrotor einer Offenend-Spinnvorrichtung mit einem Grundkörper und einem auf einem Außenumfang des Grundkörpers aufgebrachten Laufring. Dabei ist es für diese Erfindung unerheblich, ob der Außenumfang des Grundkörpers und somit auch die Innenseite des Laufrings glatt oder mit Konturen versehen sind.

Der Grundkörper weist üblicherweise eine rotationssymmetrische Außenkontur auf und ist vorzugsweise im Wesentlichen zylinderförmig. Er kann aber auch spezielle Ausformungen annehmen, beispielsweise die bereits genannten Konturen auf dem Außenumfang aufweisen und/oder Speichen aufweisen und/oder leicht nach außen gewölbt sein, um Luftwirbel zu reduzieren.

Der Laufring weist eine Lauffläche auf, die eine im Axialschnitt der Stützscheibe ballig geformte Außenkontur besitzt. Dadurch wird - wie oben beschrieben - der Kontaktpunkt der Lauffläche mit dem Schaft des Spinnrotors mehr zur Mitte der Lauffläche verschoben und folglich Verschleißerscheinungen reduziert. Unter einem Axialschnitt wird gemäß der vorliegenden Erfindung jeder Schnitt durch die Stützscheibe verstanden, dessen Schnittebene die Rotationsachse des Grundkörpers enthält.

Erfindungsgemäß weist die Lauffläche wenigstens zwei Teilabschnitte auf, zwischen welchen wenigstens eine rillenförmige Aussparung gebildet ist.

Die wenigstens eine rillenförmige Aussparung kann dadurch erzielt werden, dass zwischen den beiden Teilabschnitten eine vorzugsweise umlaufende Nut angeordnet ist.

Die besagte Nut kann unterschiedliche Formen haben, insbesondere rechteckig, trapezförmig oder zumindest annähernd V-förmig. Dabei ist eine V-förmige Nut besonders vorteilhaft, da sie bei guter Oberflächenvergrößerung und damit guter Kühlleistung die höchste Belastbarkeit aufweist.

Die wenigstens eine rillenförmige Aussparung kann aber besonders vorteilhaft dadurch erzielt werden, dass die wenigstens zwei Teilabschnitte mit einer unterschiedlich zueinander geformten Außenkontur versehen sind. Die rillenförmige Aussparung ist dann durch das direkte Aneinanderstoßen der beiden unterschiedlich geformten Teilabschnitte ausgebildet. Beispielsweise kann dabei ein Teilabschnitt mit einer ballig geformten Außenkontur versehen sein, während der andere Teilabschnitt eine - im Längsschnitt betrachtet - ebene Außenkontur aufweist.

Besonders vorteilhaft ist es jedoch, wenn die wenigstens zwei Teilabschnitte jeweils für sich mit einer ballig geformten Außenkontur versehen sind. Die rillenförmige Aussparung kann dann wiederum durch das direkte Aneinanderstoßen der beiden unterschiedlich ballig geformten Teilabschnitte ausgebildet sein.

Ebenso kann aber eine Nut die durch das direkte Aneinanderstoßen von zwei unterschiedlich geformten Teilabschnitten ausgebildete rillenförmige Aussparung noch vertiefen.

Durch die rillenförmige Aussparung vergrößert sich die Oberfläche der Lauffläche und damit die für die Kühlung verantwortliche Konvektionsfläche. Es wird folglich, dank besserer Kühlung, die Wärmebelastung der Stützscheibe reduziert, so dass eine frühzeitige Ermüdung des Materials des Laufbelags vermieden werden kann. Sind dabei zusätzlich die wenigstens zwei Teilabschnitte jeweils für sich mit einer ballig geformten Außenkontur versehen, so ergeben sich trotz der geneigten Achsen der Stützscheiben zwei Kontaktpunkte des Schafts mit der Lauffläche. Wird nun im Betrieb der Spinnrotor durch den Tangentialriemen in den Keilspalt gedrückt, so ergibt sich aufgrund der zwei Kontaktpunkte eine vergrößerte Kontaktfläche und eine sehr gleichmäßige Belastung des Laufbelags über seine Breite, was die Wärmebelastung und den Verschleiß des Laufbelags noch weiter reduziert. Es hat sich dabei gezeigt, dass es trotz der vergrößerten Kontaktfläche nur zu einer geringfügigen Vergrößerung der Walkarbeit im Laufbelag kommt, so dass aufgrund der gleichmäßigeren Belastung des Laufbelags die Wärmebelastung insgesamt reduziert wird.

Um die Bildung von Rissen im Laufring zu verhindern ist es vorteilhaft, die rillenförmige Aussparung bzw. den Nutgrund konkav abzurunden. Ebenso ist es vorteilhaft, scharfe Kanten im Profil des Laufrings, insbesondere einen zwischen der Lauffläche und der wenigstens einen Nut vorhandenen Übergang, konvex abzurunden, um den Verschleiß an diesen Stellen zu verringern.

Um die Kontaktpunkte bzw. -flächen noch besser auf die Lauffläche zu verteilen ist es vorteilhaft, die wenigstens zwei Teilabschnitte mit wenigstens zwei unterschiedlichen, ballig geformten Außenkonturen zu versehen und/oder die wenigstens zwei Teilabschnitte so auszugestalten, dass sie wenigstens zwei im Axialschnitt unterschiedlich hohe Außenkonturen aufweisen. Für den Fall, dass die Außenkonturen im Axialschnitt einem Kreisbogen entsprechen, können die unterschiedlichen, ballig geformten Außenkonturen durch unterschiedliche Krümmungsradien der Kreisbögen realisiert sein. Für die unterschiedlich hohen Außenkonturen kann der Krümmungsmittelpunkt der Kreisbögen in unterschiedlichem Abstand zur Drehachse der Stützscheibe gewählt werden. In beiden Fällen wird durch die so erreichte bessere Verteilung der Kontaktpunkte bzw. -flächen auf die Lauffläche auch die Wärmebelastung gleichmäßiger verteilt, was die Lebensdauer der Stützscheibe verlängert.

Es ist auch vorteilhaft, die Lauffläche so zu gestalten, dass sie eine per se breitere Auflagefläche und damit eine auf einen breiteren Bereich verteilte Wärmebelastung aufweist. Dies kann dadurch erreicht werden, dass die wenigstens zwei Teilabschnitte eine gegenüber der Achse der Stützscheibe geneigte Lauffläche ausbilden. Für eine im Axialschnitt kreisbogenförmige Außenkontur der wenigstens zwei Teilabschnitte bedeutet dies, dass der Krümmungsmittelpunkt des Kreisbogens von der Mitte der Stützscheibe bzw. des Laufbelags in Axialrichtung verschoben ist.

Besonders vorteilhaft ist es, wenn die wenigstens zwei Teilabschnitte jeweils die gleiche Breite haben. Dann kommt es - insbesondere in Kombination mit gleichmäßig verteilten Kontaktpunkten bzw. -flächen und der daraus folgenden gleichmäßig verteilten Wärmebelastung - zu einer gleichmäßigen Wärmeabfuhr, die sich als besonders materialschonend herausstellt.

Die Breite der Stützscheiben liegt vorteilhafterweise zwischen 4 mm und 10 mm, besonders vorteilhafterweise zwischen 6 mm und 8 mm und insbesondere zwischen 6,5 mm und 7,5 mm. Diese Breiten haben sich, im Hinblick auf die übrigen Maße des Spinnrotors und des Durchmessers der Stützscheibe, als bester Kompromiss zwischen Wärmebelastung, Auflagefläche und Handhabung herausgestellt.

Vorteilhaft ist es weiterhin, wenn die ballig geformte Außenkontur der Lauffläche einen Krümmungsradius aufweist. Sind die beiden Teilabschnitte mit einer gemeinsamen, ballig geformten Außenkontur versehen, so beträgt der Krümmungsradius vorzugsweise das 7- bis 13-fache der Breite der Stützscheibe. Sind die die wenigstens zwei Teilabschnitte hingegen jeweils für sich mit einer ballig geformten, einen Krümmungsradius aufweisenden Außenkontur versehen, so beträgt der Krümmungsradius jedes Teilabschnitts vorzugsweise das 1,2-fache bis 1,7-fache der Breite der Stützscheibe.

Ferner wird eine Lagerung für einen Spinnrotor einer Offenend-Spinnvorrichtung vorgeschlagen. Diese Lagerung weist paarweise angeordnete Stützscheiben auf, die einen Keilspalt ausbilden. Der Spinnrotor kann dann mit seinem Schaft in besagtem Keilspalt gelagert werden. Erfindungsgemäß ist dabei zumindest eine der Stützscheiben wie oben beschrieben ausgebildet. So sind die Auflagepunkte des Schafts des Spinnrotors in Richtung der Mitte der Lauffläche der Stützscheiben verlagert und die Wärmebelastung der Stützscheiben ist dank der rillenförmigen Aussparung reduziert.

Weitere Vorteile der Erfindung sind in den nachfolgenden Ausführungsbeispielen beschrieben. Es zeigen:
- **Figur 1**: eine Seitenansicht eines Spinnrotors einer Offenend-Spinnvorrichtung mitsamt Lagerung,
- **Figur 2a**: eine abgebrochene, schematische Schnittdarstellung eines Ausführungsbeispiels einer Stützscheibe,
- **Figur 2b**: eine abgebrochene, schematische Schnittdarstellung eines weiteren Ausführungsbeispiels einer Stützscheibe,
- **Figur 3a**: eine abgebrochene, schematische Schnittdarstellung eines weiteren Ausführungsbeispiels einer Stützscheibe und
- **Figur 3b**: eine abgebrochene, schematische Schnittdarstellung eines weiteren Ausführungsbeispiels einer Stützscheibe.

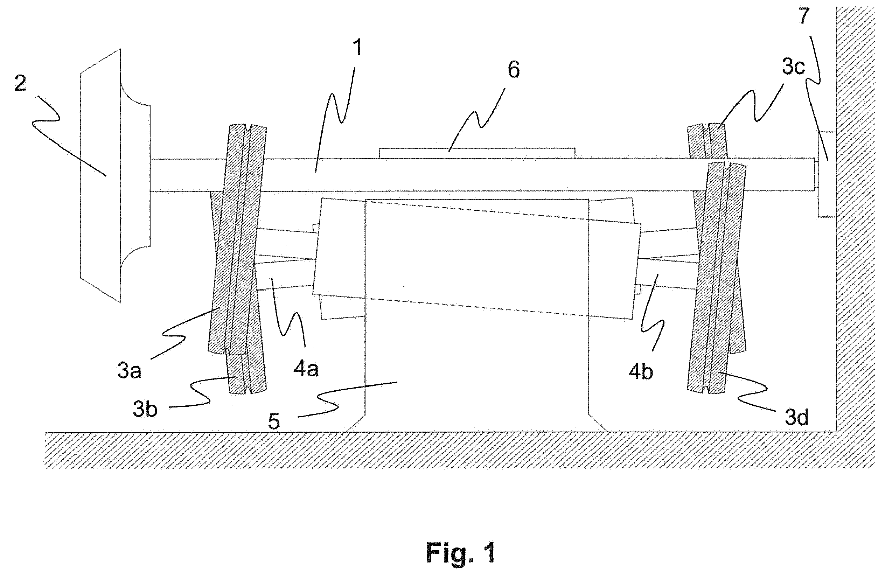

Wie in Figur 1 dargestellt, liegt der Schaft 1 eines Spinnrotors 2 einer Offenend-Spinnvorrichtung in von Stützscheiben 3 gebildeten Keilspalten. Die Stützscheiben 3 sind dabei zu beiden Seiten des Schafts 1 jeweils mit gemeinsamen Achsen 4 in einem Lagerbock 5 gelagert. Die Achsen 4 sind so gegeneinander und gegen den Schaft 1 geneigt, dass ein den Schaft 1 antreibender Tangentialriemen 6 auf den Schaft 1 einen Axialschub in Richtung eines Spurlagers 7 ausübt. Die besondere Ausbildung der Lauffläche 10 der Stützscheiben 3 ist in dieser Figur nur angedeutet und wird in den folgenden Figuren detaillierter gezeigt. Dabei wird, um die Anschaulichkeit zu erhöhen, die im Axialschnitt ballig geformte Außenkontur übertrieben dargestellt.

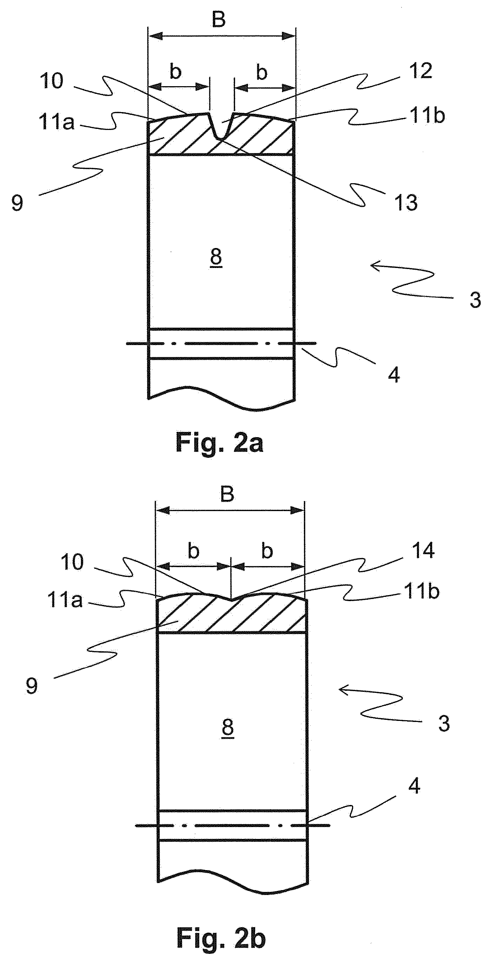

Figur 2a zeigt einen Querschnitt eines ersten Ausführungsbeispiels einer Stützscheibe 3. Auf dem Grundkörper 8 ist ein Laufring 9 mit einer Lauffläche 10 aufgebracht. Die Lauffläche 10 besitzt eine im Axialschnitt ballig geformte Außenkontur, so dass sich in vorteilhafter Weise ein Kontakt der Lauffläche 10 mit dem Rotorschaft 1 in einem mittigen Bereich der Lauffläche 10 ausbildet, von wo aus die entstehende Wärme gleichmäßig verteilt werden kann.

Außerdem weist der Laufring 9 eine V-förmige Nut 12 auf, die die Lauffläche 10 in zwei Teilabschnitte 11 a, 11 b unterteilt. Die Nut 12 vergrößert dabei die Oberfläche der Lauffläche 10 und verbessert damit die Kühlung. Zugleich ergeben sich aufgrund der Nut 12 in vorteilhafter Weise zwei Kontaktpunkte mit dem Schaft 1 und somit eine vergrößerte Kontaktfläche, was zu einer gleichmäßigeren Wärmebelastung und einem gleichmäßigeren Verschleiß der Lauffläche 10 führt. Der Nutgrund 13 der Nut 12 ist hierbei konkav abgerundet, um die Bildung von Rissen im Laufring 9 zu verhindern.

Die Stützscheibe 3 weist vorzugsweise eine Breite B zwischen 6,5 mm und 7,5 mm auf, was ebenfalls zu einer geringen Wärmebelastung des Laufbelags beiträgt. Weiterhin weisen bei dem gezeigten Ausführungsbeispiel auch beiden Teilabschnitte 11 a, 11 b jeweils die gleiche Breite b auf.

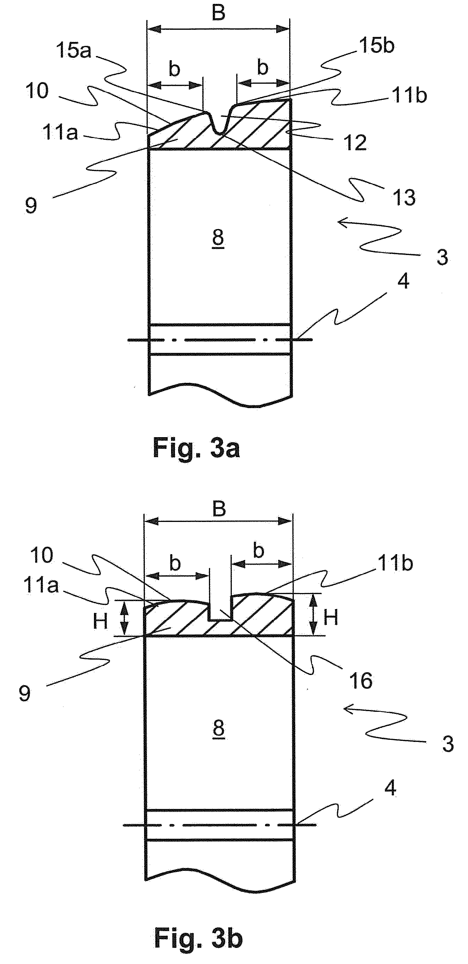

Die beiden Teilabschnitte 11 a, 11 b der Stützscheibe 3 der Figur 3a weisen eine gemeinsame, ballig geformte Außenkontur mit einem Krümmungsradius auf. Der Krümmungsradius beträgt dabei vorteilhafterweise etwa das 10-fache der Breite B der Stützscheibe 3.

Bei den nachfolgenden Beschreibungen der in Figuren 2b, 3a und 3b dargestellten alternativen Ausführungsbeispiele werden für Merkmale, die im Vergleich zum in Figur 2a dargestellten ersten Ausführungsbeispiel in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

Bei dem in Figur 2b gezeigten Ausführungsbeispiel weisen die beiden Teilabschnitte 11 a, 11 b der Lauffläche 10 jeweils für sich eine ballig geformte Außenkontur auf. So ergibt sich, ganz ohne separate Nut, eine rillenförmige Aussparung 14. Auch hier bewirkt die rillenförmige Aussparung 14 eine Vergrößerung der Oberfläche der Lauffläche 10 und somit eine verbesserte Kühlung. Aufgrund der jeweils für sich ballig geformten Außenkontur der beiden Teilabschnitte 11a, 11 b ergibt sich wiederum eine vorteilhafte, vergrößerte Kontaktfläche mit einer gleichmäßigen Wärmeverteilung und einem gleichmäßigeren Verschleiß.

Die ballig geformten Außenkonturen der beiden Teilabschnitte 11 a, 11 b weisen auch hier einen Krümmungsradius auf. Der Krümmungsradius jeder der beiden ballig geformten Außenkonturen beträgt dabei vorteilhafterweise etwa das 1,3-fache bis 1,5-fache der Breite B der Stützscheibe 3. Abweichend von der hier gezeigten Darstellung ist es jedoch auch möglich, die Außenkonturen der beiden Teilabschnitte 11 a, 11 b jeweils mit unterschiedlichen Krümmungsradien zu versehen

In Figur 3a ist nun eine Stützscheibe 3 gezeigt, bei der die durch die Teilabschnitte 11 gebildete Lauffläche 10 gegenüber der Achse 4 der Stützscheibe 3 geneigt ist. Dadurch kann auch bei einer stärker geschränkten Lagerung ein Kontaktpunkt bzw. eine Kontaktfläche zwischen der Lauffläche 10 und dem Schaft 1 des Spinnrotors 2 im Bereich der Mitte der Lauffläche 10 erzielt werden. Außerdem weist dieses Ausführungsbeispiel eine V-förmige Nut 12, deren Nutgrund 13 konkav gerundet ist, und konvex gerundete Übergänge 15a, 15b zwischen der Lauffläche 10 und der Nut 12 auf. Diese konvex gerundeten Übergänge 15a, 15b sind scharfen Kanten vorzuziehen, da dadurch ein punktueller Verschleiß an den scharfen Kanten gemindert wird.

Als letztes Ausführungsbeispiel zeigt Figur 3b eine Stützscheibe 3 mit einem Laufring 9, dessen Lauffläche 10 zwei Teilabschnitte 11a, 11 b aufweist, die jeweils für sich mit einer ballig geformten Außenkontur versehen sind. Dabei weisen, anders als im Ausführungsbeispiel aus Figur 2b, die Außenkonturen der beiden Teilabschnitte 11 a, 11 b eine zueinander unterschiedliche Höhe H auf. Dadurch werden, im Gegensatz zu gleich hohen Außenkonturen, die Kontaktpunkte zum Schaft 1 des Spinnrotors 2 gleichmäßig stark auf die beiden Teilabschnitte 11 a, 11 b verteilt, was sowohl die Wärmebelastung als auch den Verschleiß gleichmäßiger auf die Teilabschnitte 11 a, 11 b verteilt. In diesem Ausführungsbeispiel weist der Laufring 9 zudem eine rechteckige Nut 16 auf. Im Gegensatz zu einer V-förmigen Nut ist die rechteckige Nut 16 zwar weniger robust, dafür weist sie eine größere Oberfläche und damit bessere Kühleigenschaften auf.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeiche liste

- 1: Schaft
- 2: Spinnrotor
- 3: Stützscheibe
- 4: Achse
- 5: Lagerbock
- 6: Tangentialriemen
- 7: Spurlager
- 8: Grundkörper
- 9: Laufring
- 10: Lauffläche
- 11: Teilabschnitte der Lauffläche
- 12: V-förmige Nut
- 13: Nutgrund
- 14: Rillenförmige Aussparung
- 15: Übergang zwischen Lauffläche und Nut
- 16: Rechteckige Nut

- B: Breite der Stützscheibe
- b: Breite eines Teilabschnitts
- H: Höhe der Außenkontur eines Teilabschnitts

## Patentansprüche

1. Stützscheibe für eine Lagerung für einen Spinnrotor (2) einer Offenend-Spinnvorrichtung, wobei die Stützscheibe (3) einen Grundkörper (8) und einen auf einem Außenumfang des Grundkörpers (8) aufgebrachten Laufring (9) mit einer Lauffläche (10) aufweist, wobei die Lauffläche (10) eine im Axialschnitt ballig geformte Außenkontur besitzt, **dadurch gekennzeichnet, dass** die Lauffläche (10) wenigstens zwei Teilabschnitte (11) aufweist, zwischen welchen wenigstens eine rillenförmige Aussparung (12, 14, 16) ausgebildet ist.

2. Stützscheibe nach dem vorherigen Anspruch, **dadurch gekennzeichnet, dass** die wenigstens eine rillenförmige Aussparung (12, 14, 16) durch eine vorzugsweise umlaufende Nut (12, 16) gebildet ist.

3. Stützscheibe nach dem vorherigen Anspruch, **dadurch gekennzeichnet, dass** die Nut (12) zumindest annähernd V-förmig ist.

4. Stützscheibe nach einem der vorherigen Ansprüche, **dadurch gekennzeichnet, dass** die wenigstens zwei Teilabschnitte (11) jeweils für sich mit einer ballig geformten Außenkontur versehen sind.

5. Stützscheibe nach einem der vorherigen Ansprüche, **dadurch gekennzeichnet, dass** die wenigstens eine rillenförmige Aussparung (12, 14, 16) konkav gerundet ist und/oder der Laufring (9) zwischen der Lauffläche (10) und der wenigstens einen Nut (12, 16) einen Übergang (15) aufweist, der konvex abgerundet ist.

6. Stützscheibe nach einem der vorherigen Ansprüche, **dadurch gekennzeichnet, dass** die wenigstens zwei Teilabschnitte (11) mit zwei unterschiedlich zueinander ausgebildeten, ballig geformten Außenkonturen versehen sind und/oder die wenigstens zwei Teilabschnitte (11) wenigstens zwei im Axialschnitt unterschiedlich hoch zueinander ausgebildete Außenkonturen aufweisen.

7. Stützscheibe nach dem vorherigen Anspruch, **dadurch gekennzeichnet, dass** die wenigstens zwei Teilabschnitte (11) eine gegenüber der Achse (4) der Stützscheibe (3) geneigte Lauffläche (10) ausbilden.

8. Stützscheibe nach einem der vorherigen Ansprüche, **dadurch gekennzeichnet, dass** die wenigstens zwei Teilabschnitte (11) jeweils die gleiche Breite (b) haben.

9. Stützscheibe nach einem der vorherigen Ansprüche, **dadurch gekennzeichnet, dass** die Stützscheibe (3) eine Breite (B) hat, die zwischen 4 mm und 10 mm, bevorzugt zwischen 6 mm und 8 mm, besonders bevorzugt zwischen 6,5 mm und 7,5 mm, liegt.

10. Stützscheibe nach dem vorherigen Anspruch, **dadurch gekennzeichnet, dass** die ballig geformte Außenkontur einen Krümmungsradius aufweist, wobei der Krümmungsradius das 7- bis 13-fache der Breite (B) beträgt.

11. Stützscheibe nach Anspruch 9, **dadurch gekennzeichnet, dass** die wenigstens zwei Teilabschnitte (11) jeweils für sich mit einer ballig geformten, einen Krümmungsradius aufweisenden Außenkontur versehen sind, wobei der Krümmungsradius das 1,2-fache bis 1,7-fache der Breite (B) beträgt.

12. Lagerung für einen Spinnrotor (2) einer Offenend-Spinnvorrichtung mit paarweise angeordneten, einen Keilspalt ausbildenden Stützscheiben (3), wobei der Spinnrotor (2) mit seinem Schaft (1) in dem Keilspalt lagerbar ist, **dadurch gekennzeichnet, dass** zumindest eine der Stützscheiben (3) nach einem der vorherigen Ansprüche ausgebildet ist.
